# EUROPEAN PATENT APPLICATION

(11) **EP 1 118 950 A1**
(43) Date of publication of application: **25.07.2001**
(21) Application number: 00410005.3
(22) Date of filing: 21.01.2000
(51) Int. Cl.: G06F 17/30

(54) **Process for personalized access to the internet network**

(71) Applicant: Hewlett-Packard Company, A Delaware Corporation, Palo Alto, CA 94304 (US)
(72) Inventor: Brebner, Gavin, 38410 Saint Martin d'Uriage (FR)
(74) Representative: Lloyd, Richard Graham

(57) **Abstract**

A process for generating an automated HTML page to the user which is locally created in his personal computer, and which takes into account private data contained into at least one profile file. The process involves the use of an Agent module that, at predetermined intervals, polls one or more predetermined service provider(s), and downloads a file that simultaneously contains both data representative of products or services, and rules stating the conditions for the attribution of the data. By comparing these rules with the private data contained within said at least one profile, a data mining process is locally achieved by the Agent which can construct a personalized HTML page containing items of information or/and services/products which are relevant to the considered profile. The personalized HTML page is then pushed into a web browser for the purpose of displaying the selected items to the web user. That achieves an automatic and personalized access to valuable information available on the network, in accordance with the confidential and private personal profile of the user.

## Description

### Technical field of the invention

The invention relates to communication systems and more particularly to a process for performing the local creation of a Hyper Text Markup Language (HTML) page for the purpose of providing a personalized access to the Internet network.

### Background art

The constant progress of the technology of information and that of the communication systems, particularly with the explosion of the Internet and intranet networks, has resulted in the development of an era of information. With one single personal computer, any individual in the world can get a connection to the Internet network, and have a direct access to a wide range of information, as well as electronic business applications. However, since any computer connected to the network tends to become an information provider, the amount of information available is constantly increasing, as is the difficulty for any individual or potential customer to find his way through the network and, eventually, find the information he is looking for. Typically, it is not rare that an Internet consumer has to surf through dozens of web sites and URL addresses and consult many pages before he gets a direct access to the particular information he needs. The web structures are continuously being developed, resulting in the fact that, even for one unique product manufacturer or service provider, the number of pages composing a web site increases and becomes time consuming. The concept of agents and search engines - more or less sophisticated - has been introduced for improving the access to the information and for giving the possibility to the customer to delegate some specific tasks to automatic modules in order to simplify part of the searching process.

US 5,877,759 assigned to Netscape Communications Corp. and entitled *Interface for user/agent interaction* shows an example of user interface providing some assistance to the client user interface and an interface that is centred on autonomous processing of whole tasks rather than sequences of commands, and the detection of contexts requiring the launch of a process.

WO 98/47250 PCT application assigned IBM Corp. and entitled *Apparatus and method for communicating between an intelligent agent and client computer process using disguised messages* illustrates an agent for the communication with a client and which uses a selector known by both parties to generate and interpret messages and thereby effectively disguise confidential information transmitted in the message from third parties.

WO 98/43146 application assigned to IBM Corp., and entitled *Intelligent agent with negotiation capability and method of negotiation therewith* discloses another improvement brought to a so-called intelligent agent.

It is now clear that the size of the Internet network, while guaranteeing the diversity of the information that is available, tends to become, to a certain extent, a barrier for non informed people who try to find their way through the web jungle and, certainly represents a potential waste of time for anyone, informed or not.

Some service providers feel concerned to personalize a little more the access that is offered to their visitors. That concern gives them a good reason to suggest that their visitors and potential customers fill-in electronic forms and leave behind them some personal data for the purpose of improving the relationship at their next visit. The development of "cookies" - not really appreciated by the web consumers due to privacy concerns - is another means for the service providers for keeping a trace of the visits. By developing and maintaining a database containing private data of web visitors, the service providers may expect to offer a more personalized access to their potential customers. However the development of such databases is not often appreciated by the visitors, even when the information therein loaded appears correct, and further, raise legal issues. Indeed, in many countries such databases are subject to severe regulations and their proper management has become a concern for many service providers.

Therefore there is a need to improve the access to the Internet customers and particularly for providing a more personalized access to the huge amount of information available on the Internet network.

Additionally, there is a desire to reduce the development of the centralized databases containing customers private data, since the customers are becoming increasingly aware, and sensitive, to attempts to export information about them for use in marketing and selling activities

### Summary of the invention

It is an object of the present invention to enhance personalized access to the Internet network while avoiding, for a particular user, the dissemination of his personal data throughout the different service providers.

The technical problem is solved by the present invention as defined in the independent claim 1. Basically, there is provided a process for generating an automated Hyper Text Markup Language (HTML) page to the user which is locally created in his personal computer, and which takes into account private data contained into at least one profile file. The process involves the use of an Agent module that, at predetermined intervals, polls one or more predetermined service provider(s), and downloads a file that simultaneously contains both data representative of products or services, and rules for stating the conditions for the attribution of the data. By comparing the rules with the private data contained within said at least one profile, a data mining process is locally achieved by the Agent which can construct a personalised HTML page containing items of information or/and services/products which are relevant to the considered profile. The personalized HTML page is then pushed into a web browser for the purpose of displaying the selected items to the web user. That achieves an automatic and personalised access to valuable information available on the network, in accordance with the personal profile of the user.

Since the HTML page is locally generated with the private data that is contained in the profile(s), and which belongs to the user, the service provider does not need to create and maintain any kind of centralized data base, and avoids the numerous drawbacks which result from those databases. Further the customer keeps full control of his personalized data and may even multiply the number of different "profiles" when necessary.

In one embodiment, at least one profile file may contain private data that is introduced by an initialisation process that is executed during the first installation of the computer. The profile may further contain technical data that is reported by an automatic analysis program.

Although the invention can be used in many different applications for enhancing the access to the information to the Internet network, it appears that the latter is particularly suitable in the perspective of the development of electronic business. Indeed, the process allows a product manufacturer, or even an advertising publisher, to aggregate a wide range of information provided from numerous service providers, and provide an extensive file which can be locally processed by the Agent operating the data mining for the purpose of reporting valuable and personalized information which closely depends on the personal data loaded into the profile file.

The personal data is loaded into a profile file which is filled by the customer at the first installation of his computer, and which may possibly be encrypted in order to enhance the security of the personal data.

### Description of the drawings

An embodiment of the invention will now be described, by way of example only, with reference to the accompanying drawings, wherein:

Figure 1 illustrates a client server environment for typical electronic business applications between a user and a service provider.

Figure 2 is a flow chart illustrating the periodical downloading, by Agent module 11, of the files containing the services offers of the service provider(s).

Figure 3 is a flow chart illustrating the process of automatic generation of a local HTML page

Figure 4 shows the different messages that are exchanged in the communication between the Agent module 11, a service provider, and a publisher.

Figure 5 details a configuration involving a proxy.

### Description of the preferred embodiment of the invention

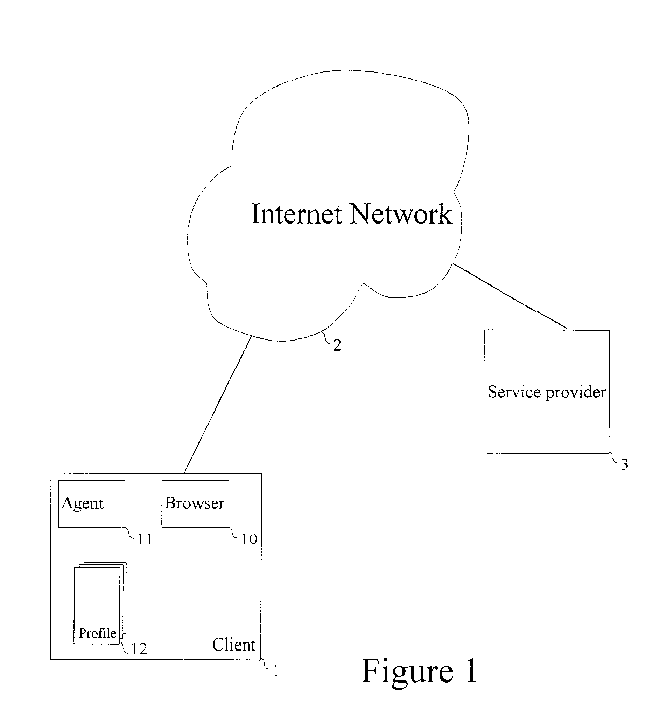

Figure 1 shows a client server environment for typical electronic business applications between a user's computer 1, comprising an information access or management tool such as a browser 10, and a service provider 3. Computer 1 can access a Service Provider 3 via an Internet network 2.

Many internet service providers try to extract information from end users, for the purpose of applying data mining techniques and unsolicited product or service offers to their clients. The invention obviates the need for any centralized database with the associated legal issues, and the privacy concerns of the customers.

To achieve this goal, an Agent module 11 is installed and executes on the user's computer. Agent module 11 may be installed at the manufacture of the computer or may also be later downloaded by the user during an Internet connection to a service provider. The different routines and procedures that are involved in the installation of Agent module 11 are well known to the skilled man and will not be further elaborated on.

Agent module 11 uses a profile file 12 - hereinafter designated as *Profile*.*xml-* and which remains totally under control of the user. *Profile*.*xml* file 12 contains information that is personal to the user and may also comprise data which is representative of the technical features of the computer, for instance the type of the processor, the hard disk capacity, the Random Access Memory (RAM) etc.... Generally speaking, *Profile*.*xml* file 12 can be generated at any time, but may be particularly created during the first launching of Agent 11, for instance when the user is booting his computer for the first time. To facilitate the introduction of the personal data, Agent module 11 may even be fitted with some kind of *wizard* facility (see for instance *Windows* 98 manufactured by Microsoft Corporation of Redmond, Washington, USA) that allows the automatic execution of the different tasks involved for that purpose. Regarding some particular data representative of the user's personal computer, Agent module 11 may even take advantage of the use of a specific software executable file that is called for collecting some data representative of the configuration of the user's computer. In one particular embodiment of the invention, a so-called *sysinfo.exe* executable file is used for accessing to the internal technical parameters that are loaded into the BIOS layer. The *sysinfo.exe* file can be installed into the user's computer at the same time as the agent. In the case of a agent being downloaded from the Internet network, the installation process will also include the installation of sysinfo.exe. Once installed, the *sysinfo.exe* executable file obtains its information by accessing the SMBIOS tables constructed during the boot process, or via interrogation of the Distributed Management Interface (DMI), or still the Windows Management Instrumentation (WMI) as known from Microsoft. As known by the skilled man, the DMI interface is an Application Programming Interface (API) that consists in a set of routines that are called for accessing the information stored within the BIOS layer. Basic information relating to the DMI programming interface can be found at the address http://www.dmtf.org/spec/html. While the DMI routines appear quite useful for accessing the internal characteristics of the user's computer, it should be noted that any other mechanisms could be contemplated, the contents of the standard specifications being suitably adapted for the purpose of extracting the internal technical data characteristics of the machine.

By using the DMI or WMI interfaces, or by accessing directly the BIOS level, the *sysinfo.exe* executable file accesses the different tables that are contained into the System Management BIOS (SMBIOS) for the purpose of building a profile which contains the comprehensive information regarding the user's configuration, required for completing a request for transaction. Such information includes the type of processor, the type of chipset, the number of hard disk drives, the particular graphic card being used, the serial number of the display, the reference of the operating system and so on

The information gathered on the machine can then be combined with the user's personal data in order to build a comprehensive profile file that will be used by the process which is described below.

Generally speaking the *Profile*.*xml* file 12 may take different forms, but can advantageously conform with the well known **XML** structure proposed by the World Wide Web Consortium (W3C) and which is associated, as known by the skilled man, to a second file: a Document Type Definition (DTD) file. The DTD file defines the rules for how the elements, attributes, and other data in an XML-encoded profile are defined and logically related. For the sake of illustration, a simple example of a *Profile.xml* file is shown below:

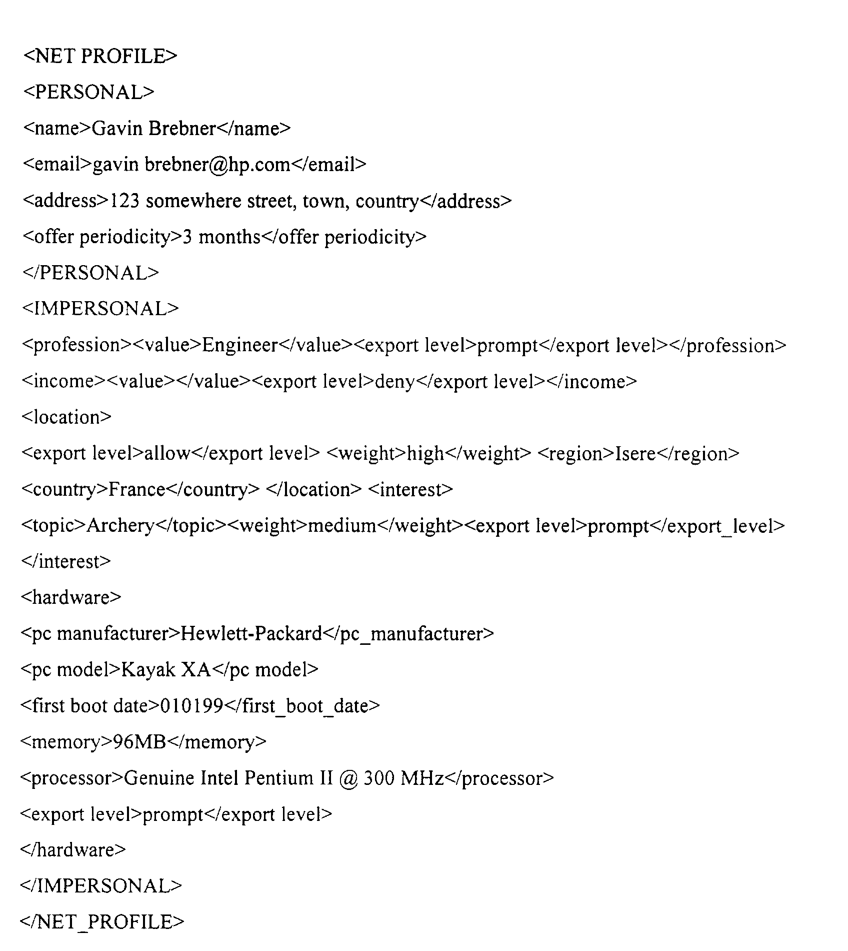

As shown in the example above, the *Profile*.*xml* comprises data which is personal to the user (fields *<name>,* <*email*>, *<address>,* etc...) and more *impersonal* data which is representative of his topics of interests (field *<interest>,* his range of revenue (field *<income>),* but also data representative of his computer (field <hardware>).

The *xml* format is mentioned only by way of example and it will be understood that any other format or data structure may be used for embodying the HTML page creation process.

In one particular embodiment, Agent module 11 manages different sets of profiles, such as, for instance, a *profession_prof*.*xml* file, a *personal_prof.xml* file, *sports_club_prof*.*xml* file, etc... which will allow, as described below, different personalized access to the Internet network for the particular owner of the computer. Further, by using different profiles, the same computer may serve different users, for instance members of the same family. Each of those files may share the same structure, as illustrated above.

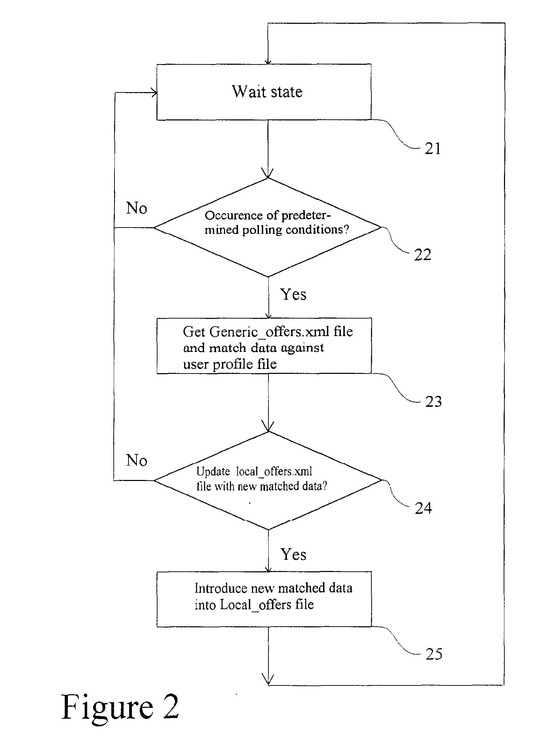

The *Profile.xml* file(s) 12 is/are used in association with a technical process which is executed by Agent 11, and shown in figure 2, for the purpose of downloading, e.g. at regular intervals, specific files - hereinafter referred to *Generic_Offers*.*xml* files - which are provided by a service provider. The service provider may be, for instance, a product manufacturer who wishes to provide personalized offers to his clients depending on the type of machine being used by that client (loaded in the impersonal data field of the profile file), but also in accordance with the personal data loaded in the profile file. However, in another embodiment, the service provider may also act as a publisher for different product manufacturers or service providers and may aggregate the different offers that are submitted by the latter. It should be noted that while the invention provides a new and effective arrangement for facilitating and personalizing the access to the different service providers without requiring the development of any centralized database, the particular nature of the service being provided does not fall within the scope of this invention.

An illustrative example of the structure of such a *Generic_Offers*.*xml* file is shown below:

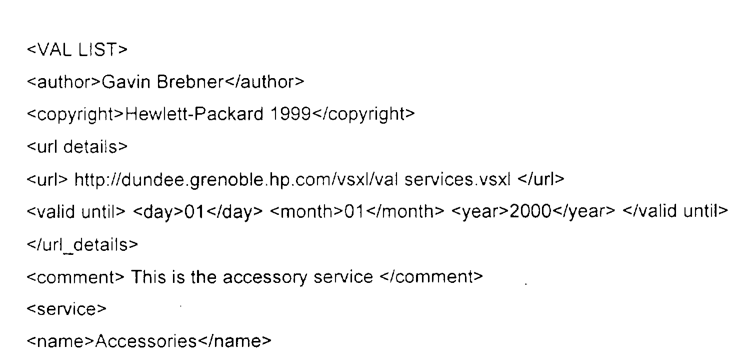

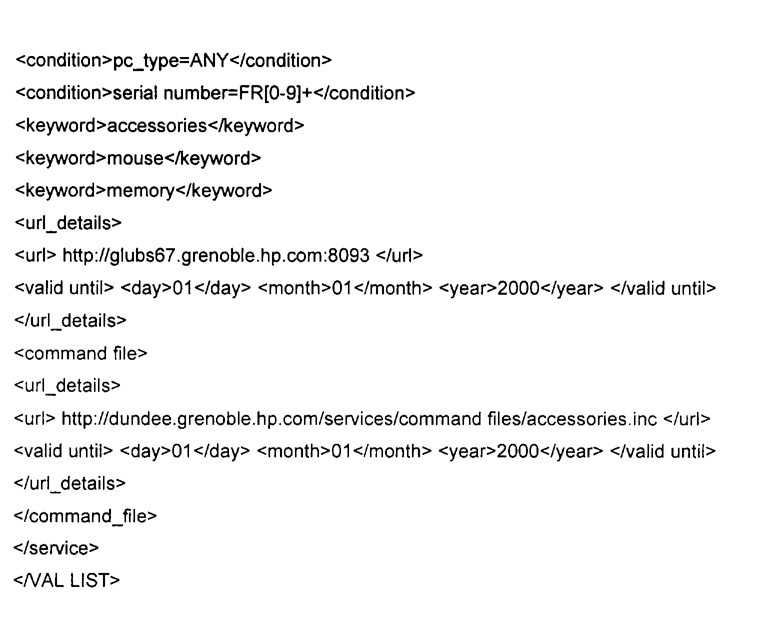

All the different fields are indicated with the known "<" and "/>" anchors. More particularly, the *Author* and *Copyright* field may respectively indicate the author responsible for the list of services, and the owner of the copyrights on the elements. The *url_details field* indicates the precise internet location of the remote service. The *Comment* notice indicates that the service is provided by an accessory manufacturer and the *conditions* fields states the different conditions which are required for proposing the particular offer or accessory to the user. As illustrated in the structure above, these conditions may cover the type of PC, the type of processor, and so on. The *keyword* field may be used for a direct access to the offers by Agent module 11, when the user types the corresponding keyword. These conditions, as will be described below, will be used by the Agent module 11 for locally achieving the data mining process directly in the user's computer. Therefore, as illustrated in the structure above, the *Generic_Offers*.*xml comprises* data which are representative of the offers provided by the service provider, but also the matching rules which express the conditions which are to be taken into account, and considered in the contextual analysis which is to be performed by Agent module 11, for the purpose of the elaboration of the personalized HTML page.

In the example laid down above, it can be seen that the service provider provides an information made up, for instance, of a list of offers/services which indicate the offers and services which are submitted. In addition to the raw information concerning the services or products, the Generic_*Offers*.*xml further* comprises the conditions for the delivery of the information, i.e. the matching user profile. A same vocabulary is used in the communication between the service provider and Agent module 11, which is defined, as mentioned above, in the Document Type Definition (DTD) for XML.

The use of the Agent module 11 in association with the profile file "*profile*.*xml*" carries out customer targeting without exporting any information from the user's personal computer. In addition, the technique permits greater contact with end users than traditional methods that rely on one-time registration or on-the-fly gathering of user information. Additionally, the profile file can be useful for multiple service providers, for their benefit and that of end users. From the end user's point of view, the profile becomes a filter with which to view the internet, blocking out items of no interest.

Figure 2 more particularly illustrates the technical process that is involved in achieving the automatic downloading of the *Generic_offers*.*xml* file from the service provider, and for updating the *local_offers*.*xml* file loaded into the user's computer.

The process is based on a polling state machine which starts with a waiting step 21 being active as long as a set of predetermined conditions are not fulfilled. Step 22 corresponds to the checking of the fulfillment of these conditions. It should be noticed that many different conditions may be used, such as, for instance, the elapsing of a fixed period resulting in the periodical polling by Agent module 11 for new versions of the *Offers*.*xml* file. An additional or alternative condition may also be the establishment of an Internet connection by the user, for instance when the latter executes a read and receive operation on his electronic mail.

In response to the fulfillment of the predetermined conditions, the process proceeds with step 23 where the *Generic_Offers.xml file* is being downloaded via the Internet connection and received by the Agent module 11. The downloading of that file can be achieved, for example, by the known Hyper Text Transfer Protocol (HTTP) that is well known to the skilled man, and which will not be further elaborated on. When the file is received by Agent module 11, the latter matches the data therein included against the user editable profile(s) files in order to extract from the *Generic_offers*.*xml* file the relevant data that appears of value to the user. In one particular embodiment, the matching process may be associated with a user-controlled weighting process on the different fields in order to permit to emphasize some special fields that are regarded to be particularly of interest to the user.

In step 24, the extracted data is compared with that loaded into the existing *Local_offers.xml* file in order to determine whether new information needs to be added to the current local file. If so, the *Local_offers.xml* file is updated in step 25 and the process proceeds again with step 21, until the calling of the next polling operation.

Therefore, in accordance with the polling process of figure 2, the Agent module 11 achieves periodical polling - daily for instance - of the publisher of the offers. In response to that polling, the latter transmits the generic reply contained in the *Generic_Offers*.*xml file,* and which is matched with the local profile(s) in order to extract the information relevant to the user as indicated in the user's profile. The matching is achieved by means of a wide range of criteria, such as the type of the PC, the personal data of the user (country, location, profession, revenue), the delay since the last offer etc...

It should be noticed that, in no way, the comprehensive profile comprising the user's private data is being exported to the service provider. In order to enhance the security of the private data contained in the profile, the latter may even be encrypted. In one particular embodiment, however, it may be useful to reduce the size of the information that is exchanged between the Agent module 11 and the server, by exporting a very limited range of data that is contained into the profile file. This very limited export may allow the service provider to construct a *Generic_offers*.*xml* that more closely depends on the particular category reported by Agent module 11 in step 23. For instance, if Agent profile indicates to the server the particular professional category to which the user belongs, for instance that of Java programmers, the service provider may construct a more personalised *Generic_offers*.*xml*. However, it is clear that even if the Agent module 11 indicates some partial elements contained in the profile files, in no way is the construction of a whole and comprehensive database made possible.

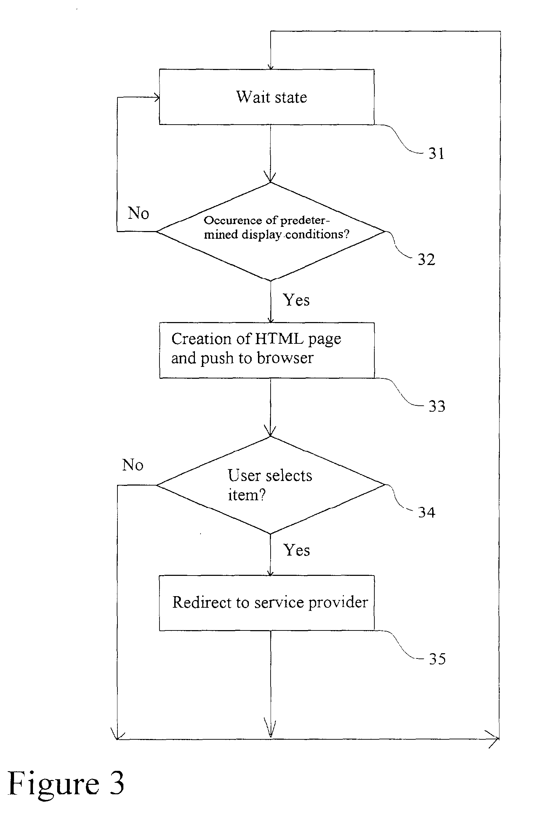

With reference to figure 3 there is shown the particular process that is associated to that described above in reference with figure 2, for generating the local HTML page that is deemed to provide valuable and personalized information to the Internet customer.

The local HTML page creation process of figure 3 first involves a waiting step 31 which remains pending as long as a set of predetermined conditions are not fulfilled. Step 32 corresponds to the checking of the fulfillment of these conditions. As for the polling process of figure 2, many different conditions may be used. In particularly, one condition may be a planned date and hour or, more simply, the direct request from the user. In some embodiments, the different conditions may depend upon the particular profiles being considered. One profile may result in the fulfillment of the condition of step 32 at a first date, while a second profile will cause the display at a second different time.

In response to the fulfillment of the predetermined conditions, the process proceeds with step 33 where the *Local_Offers.xml file* is used to create an HTML page. This creation is made by Agent module 11 that extracts from the data loaded into *Local Offers*.*xml* the particular information, or references to services/products in the case of an electronic business application.

Once generated, the Agent module launches the web browser 10 with the HTML locally constructed page being pushed therein. The user may then, step 34, select one of the different items which has been automatically listed in accordance with the particular profile contained in the *profile*.*xml* file and the *Local_offers*.*xml* file.

In one embodiment, the HTML page is generated with the precise Universal Resources locators (URL) of the service provider, so that when the user clicks on the associated hyperlink, the web browser directly gets the considered page that has been proposed to the user. In some situations, it may be useful to associate the web browser with a proxy so as to redirect the user's selection on the same service provider. This can be particularly useful when one single service provider, - e.g. an advertisement publisher - collects different source of information or offers from different service providers, for *Generic_offers.xml* file.

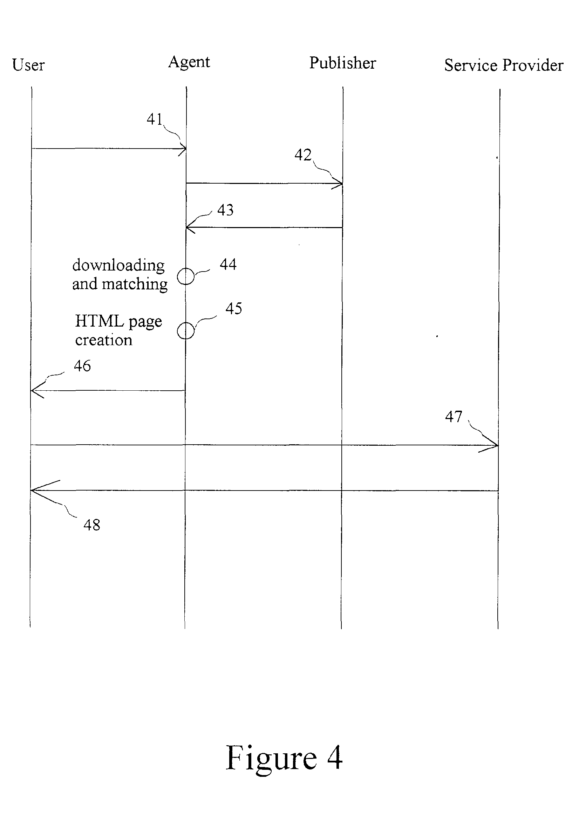

With respect to figure 4 there is detailed the particular messages that are exchanged in the process for local generation of the HTML page.

In step 41, the user installs the Agent module 11 and configures the latter with the appropriate profile(s) as explained above.

In step 42, the Agent module 11 performs the downloading of the appropriate *Generic_file*.*xml* that is available on the Publisher server. As mentioned above, the *Generic_offers.xml* file may contain data provided by numerous service providers, and rendered available by the publisher whose URL is, for instance, http://www.publisher.com. The practical transfer of the *Generic_offers.xml* file, in step 43, is achieved by means of an appropriate HTTP get request in accordance with the format that is described in the W3C request for comment (RFC) RFC 2616, well known to the skilled man.
http://www.publisher.com/generic_offers.xml

When applicable, Agent module 11 controls the downloading of only the partial part of the *Generic_offers.xml* file that correspond to the category that was mentioned by Agent module 11.

In response to that HTTP get request, the *Generic_offers*.*xml* file is returned to the Agent module 11, and stored on the hard disk of the user's computer.

Then, step 44, the Agent module performs the matching process in order to extract from the *Generic_offers*.*xml* file the data that corresponds to the profile rules. Practically, this means that, for one given piece of information contained in the *Generic_offers*.*xml* file, if the conditions are applicable to the considered user, the item will be selected for a further report to the user.

Step 45 corresponds to the local creation, at the appropriate instant, of the HTML page containing the valuable information that will be reported to the user.

This is achieved, in step 46, by the pushing by Agent module 11 of that HTML page into the web browser 10 of figure 1. The launching of the web browser permits the user to select one particular item associated to one service provider. The selection is achieved by means of a hyperlink that permits the direct connection to the URL corresponding to the service provider, in step 47. This is also achieved by means of an appropriate HTTP get request complying with the RFC 2616 format.

In response to a get request, the browser then receives the corresponding information, in step 48.

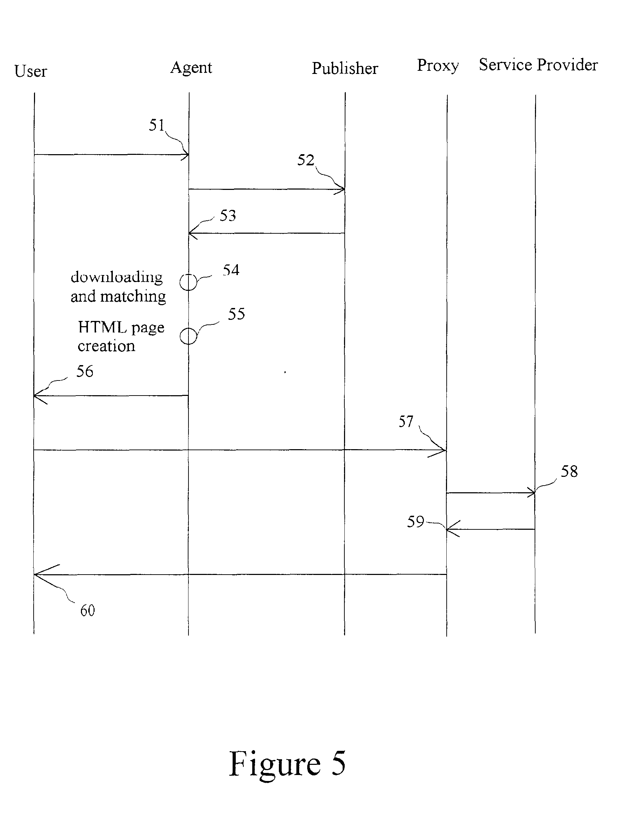

In some situations, it may be useful to arrange a proxy mechanism in order to avoid a get request connection directly from the user to the service provider. This situation is particularly illustrated in figure 5. Steps 51 to 54 of figure 5 are similar to steps 41 to 44 of figure 4.

In step 55 a HTML page is constructed comprising a selection of items resulting from the matching process achieved in step 54. In that situation, the HTML page contains a link that provides no direct access to the URL of the service provider, but, conversely, a link to the publisher with a query string of an accepted offer.

The following link may be used, for instance, in the HTML page:
<a href= "http://www.publisher.com/redirect_to?www.service_provider.com

This results in the connection to the publisher and the execution of a script that uses as an argument the query string of the real URL to be used.

In step 57, the get request is performed to the proxy, which forwards the request to the service provider, step 58. The answer follows the reverse route, that is to say, comes back via the proxy, in step 59, and then to the user in step 60. This arrangement permits the preservation of the anonymous relation between the user and the service provider for all electronic content delivered to the user. In addition, the publisher may be replaced or added to by a banking service provider that may issue a payment authorization notice to the user when the latter selects, for instance, an item that he wants to buy. With the payment authorization number, the user may then be connected to the service provider for the purpose of paying anonymously for the service that he wishes to have.

With the invention, it can be seen that no centralized database is necessary but the data is, to a certain extent, distributed in the different user's computers. Further, since the private data is no longer concentrated in the same computer, the overall security of the data is substantially improved since it is much more difficult (and pointless) for a hacker to get into the multiple different computers of end users, than a single central repository

## Claims

1. Process for personalized access to information available on the Internet network, characterized in that it involves the steps of:
- creating at least one profile file (*profile*.*xml*) comprising private data owned by the user, and/or data regarding the technical specifications of the user's computer,
- repeatedly polling a service provider in order to receive an offer file (*Generic_offers*.*xml*) comprising matching rules for matching services accessible via the internet to said at least one profile;
- applying the matching rules in the offer file to the profile file in order to select one or more services from the offer file;
- generating a HTML page describing said selected services;
- pushing said HTML page into a web browser for permitting direct access to the services selected.

2. Process according to claim 2 comprising creating and updating a local file comprising the selected services.

3. Process according to claim 2 characterized in that the polling is executed after a predetermined period, and when the user requests the establishment of an Internet connection.

4. Process according to claim 1 characterized in that said profile file (*profile*.*xml*) is encrypted into said local user machine.

5. Process according to claim 1 characterized in that said at least one profile file comprises private data regarding the user and technical data relating to the user's computer.

6. Process according to claim 1 characterized in that said at least one profile comprises technical data that is automatically collected by means of an analysis software program.

7. Process according to anyone of the preceding claims characterized in that it is used for achieving an electronic business application.

8. Computer program product comprising computer program code stored on a computer readable storage medium for, when executed on a computer, performing all the steps of any one of claims 1 to 7.

9. Apparatus for personalizing the access to information available on the Internet network, characterized in that it comprises:
- means for creating at least one profile file (*profile*.*xml*) comprising private data owned by the user, and/or data regarding the technical specifications of the user's computer,
- means for polling at predetermined instants a service provider in order to receive a file (*Generic_offers*.*xml*) comprising information associated with matching rules to be confronted with said at least one profile;
- means for matching the data received in accordance with said matching rules in order to select some pieces of information;
- means for generating a HTML page comprising said selected pieces of information;
- means for pushing said HTML page into a web browser for permitting direct access to the information being selected.

10. Apparatus according to claim 9 characterized in that it comprises means for creating and updating a local file comprising the selected items of information.

11. Apparatus according to claim 10 characterized in that the polling is executed after a predetermined period, and when the user requests the establishment of an Internet connection.
